# EUROPÄISCHE PATENTSCHRIFT

(11) **EP 3 633 783 B1**
(45) Veröffentlichungstag und Bekanntmachung des Hinweises auf die Patenterteilung: **16.11.2022**
(21) Anmeldenummer: 19200432.3
(22) Anmeldetag: 30.09.2019
(51) Int. Cl.: H01M 10/42, H02J 7/00

(54) **MEHRZWECK-POWERBANK**
MULTIPURPOSE POWER BENCH
RÉSERVE DE PUISSANCE POLYVALENTE

(30) Priorität: 05.10.2018 CH 12212018
(43) Veröffentlichungstag der Anmeldung: 08.04.2020
(73) Patentinhaber: Tecflower AG, 8854 Siebnen (CH)
(72) Erfinder: REINGER, Sascha, 8835 Feusisberg (CH)
(74) Vertreter: Prins Intellectual Property AG

(56) Entgegenhaltungen:
- AU-A4- 2016 101 307
- US-A1- 2018 069 358

## Beschreibung

### Technisches Gebiet

Die vorliegende Erfindung beschreibt eine Mehrzweck-Powerbank, umfassend ein Gehäuse mit einer Powerbankfrontseite und einer der Powerbankfrontseite gegenüberliegenden Powerbankrückseite, wobei das Gehäuse Befestigungsmittel zur Ankopplung der Powerbankfrontseite an eine Mobiltelefonrückseite eines Mobiltelefons aufweist und das Gehäuse Auflademittel zur kabellosen Aufladung des Mobiltelefons und mindestens ein Beleuchtungsmittel umfasst.

### Stand der Technik

Heute sind Smartphones, welche als internetfähige Mobiltelefone mit berührungsempfindlichem Bildschirm definiert werden, weit verbreitet und die Nutzerzahlen gehen weiterhin nach oben. Smartphones werden von diversen Firmen mit unterschiedlichen Betriebssystemen und Anwendungsprogrammen, Apps genannt, angeboten und weisen verschiedenste Funktionen auf, unter anderem können auch Bilder und Videos erstellt werden.

Allgemein werden mobile Notladegeräte zur mobilen Aufladung von Smartphones, Powerbank genannt. Diese Powerbanks umfassen einen Energiespeicher und Elektronik, um Smartphones mobil aufladen zu können. Eine Powerbank ist entsprechend kein klassisches stationäres Ladegerät, sondern kann mitgeführt werden. Derartige Powerbanks dienen dazu, die Nutzungszeit von Smartphones zu verlängern und den Geräteeinsatz vom jeweiligen Ladezustand weitgehend unabhängig zu gewährleisten. Im Gehäuse einer Powerbank ist üblicherweise eine wiederaufladbare Lithiumpolymerbatterie hoher Kapazität verbaut und am Gehäuse befinden sich unterschiedliche Anschlüsse.

In diversen Einkaufsportalen im Internet sind Powerbanks für insbesondere die Notaufladung von Smartphones auffindbar, welche neben einer reinen Aufladefunktion weitere Funktionen, wie eine Taschenlampe, wie in AU2016101307 beschrieben, Laserpointer, Solarzellen, Handwärmer, Kompass, Smartphonehalterung oder einen Datenspeicher, wie in der DE202015101248 beschrieben, aufweisen. Handelsübliche Powerbanks sind in verschiedensten Designs erhältlich, in Form einer Musikkassette, einer Tasche, einer Spielzeugfigur, einer Kurbel zur manuellen Aufladung, wie in DE202016105623 erwähnt, als Tischlampe oder in einfacherer Ausführung mit stabilem rechteckigen Gehäuse. Es sind Kabelverbindungen bekannt, mit welchen der Energiespeicher der Powerbank an ein Smartphone anschliessbar ist.

Mehr und mehr wird die Powerbank auch zum drahtlosen Aufladen von Mobilgeräten verwendet, wobei diverse Techniken verwendbar sind, wie in DE202015101248 aufgeführt, sich aber der Qi-Standard, beispielsweise erwähnt in DE202014005389, allgemein durchgesetzt hat. Zur Steigerung der Bedienungsfreundlichkeit sind Powerbanks mit der Möglichkeit für die drahtlose Aufladung von Smartphones, aufgrund der vermiedenen Verkabelung natürlich sehr interessant für den Smartphonenutzer. Damit liegt es auf der Hand, dass die Powerbanks vermehrt samt angekoppeltem Smartphone, während des Aufladens mit dem Smartphone mitgeführt werden können und auch mitgeführt werden. Es gibt Powerbanks, die nach dem Ankoppeln an ein Smartphone mit diesem Smartphone mobil mitführbar sind. Bei drahtloser Auflademöglichkeit wird das Smartphone auf die Qi-Powerbank aufgelegt und zusätzlich magnetisch oder durch Saugnäpfe, wie in der DE202013007828 beschrieben, gehalten. Ein Mitführen des Smartphones mit Powerbank ist einfach möglich, wobei ein klobiger Aufbau resultiert, die Powerbank möglichst fest mit dem Smartphone verbunden ist und rein zur Aufladung genutzt wird.

Wenn Zusatzfunktionen vorhanden sind, sind diese vom Smartphone unabhängig gestaltet, sodass ein Kompass oder eine Beleuchtungseinrichtung oder eine Videoplayer/Powerbank Kombination, wie in der US20160301229 offenbart, keine Wirkung auf die Bedienung des Smartphones haben. Selbst wenn die Powerbank mit einer Beleuchtungseinrichtung ausgestattet ist, findet keine funktionale Ankopplung an ein Smartphone statt, wobei Smartphone und Powerbank voneinander unabhängig bedient werden. Es ist weder eine physische noch eine funktionale Ankopplung der Powerbank an das Smartphone vorhanden.

Im Weiteren ist aus der US 2018/069358 A1 ebenfalls eine Mehrzweck-Powerbank bekannt mit einem Gehäuse, wobei das Gehäuse Befestigungsmittel zur Ankopplung der Powerbankfrontseite an eine Mobiltelefonrückseite eines Mobiltelefons aufweist. Im Weiteren umfasst diese Mehrzweck-Powerbank ein Beleuchtungsmittel.

Die bislang erhältlichen Powerbanks sind in der Regel immer noch vom Smartphone getrennte eigenständige teilweise klobige Energiespeicher, ohne einen an das Smartphone gekoppelten funktionalen Zusatznutzen, neben der Auflademöglichkeit.

### Darstellung der Erfindung

Die vorliegende Erfindung hat sich die Aufgabe gestellt eine Mehrzweck-Powerbank zu schaffen, welche Nutzer davon überzeugt, ein Smartphone und die Mehrzweck-Powerbank miteinander verbunden zu tragen, wobei dem Smartphone eine Zusatzfunktion, neben der Aufladung, zur Verfügung steht. Über die Auflademöglichkeit hinaus ist die Powerbank mit einem Smartphone verbindbar und liefert einen Zusatznutzen bei der Bedienung des Smartphones.

Diese Aufgabe wird dadurch gelöst, dass dem Nutzer eine neue Funktionen bei der Bedienung des Smartphones durch Ankopplung der lösbar befestigten Mehrzweck-Powerbank zur Verfügung steht. Diese Zusatzfunktion erhöht die Akzeptanz, die Mehrzweck-Powerbank und das Smartphone längere Zeit miteinander verbunden zu tragen. Konventionelle Powerbanks können diese Zusatzfunktion bzw. Zusatzfunktionen nicht bieten.

Es wird nicht nur eine neue spezielle Ankoppelvorrichtung geschaffen, sondern die Ankopplung der Mehrzweck-Powerbank am Smartphone liefert Zusatzfunktionen.

### Kurze Beschreibung der Zeichnungen

Weitere Merkmale, Einzelheiten und Vorzüge der Erfindung ergeben sich aus der nachfolgenden Beschreibung bevorzugter Ausführungsformen der Erfindung sowie der Zeichnungen. Es sind dargestellt in
- Figur 1a: zeigt eine schematische Frontansicht einer Mehrzweck-Powerbank, während
- Figur 1b: eine Rückseite einer Mehrzweck-Powerbank schematisch zeigt und
- Figur 1c: eine Mehrzweck-Powerbank mit Blick in y-Richtung auf eine Fussseite des Gehäuses der Mehrzweck-Powerbank zeigt.
- Figur 2a: zeigt eine Seitenansicht einer Mehrzweck-Powerbank, an welcher ein Gürtelclip anbringbar ist, während
- Figur 2b: eine Seitenansicht einer Mehrzweck-Powerbank mit befestigtem und aufgeklapptem Tischständer zeigt.
- Figur 3: zeigt eine Seitenansicht eines Mobiltelefons angekoppelt an eine Mehrzweck-Powerbank, wobei dieses Sandwich vom Tischständer gehalten, auf einer Oberfläche gehalten wird.
- Figur 4a: zeigt eine schematische perspektivische Ansicht einer Mobiltelefon-Mehrzweck-Powerbank Kombination in einer erste Ankupplungsstellung, während in
- Figur 4b: die Mehrzweck-Powerbank in einer verschwenkten Selbstbildstellung, in einem Schwenkwinkel von etwa 90° zeigt.

### Beschreibung

Die im Folgenden beschriebene Mehrzweck-Powerbank 1, umfasst eine Gehäuse 10, welches hier im Wesentlichen rechteckig mit abgerundeten Ecken ausgeführt ist. Die Mehrzweck-Powerbank 1 ist ein mobiles Notladegerät zur Ankopplung an Mobiltelefone oder im Allgemeinen tragbare Computer. Die hier gewählte Form der Mehrzweck-Powerbank 1 ähnelt der äusseren Gestaltung vieler Mobiltelefone, sodass die Mehrzweck-Powerbank 1, nach unten beschriebener Ankupplung an ein Mobiltelefon, vom Mobiltelefon weitgehend verdeckt ankuppelbar und verschwenkbar gelagert ist. Es können aber auch anders geformte Gehäuse 10, beispielsweise mit runder oder elliptischer Querschnittsfläche gewählt werden.

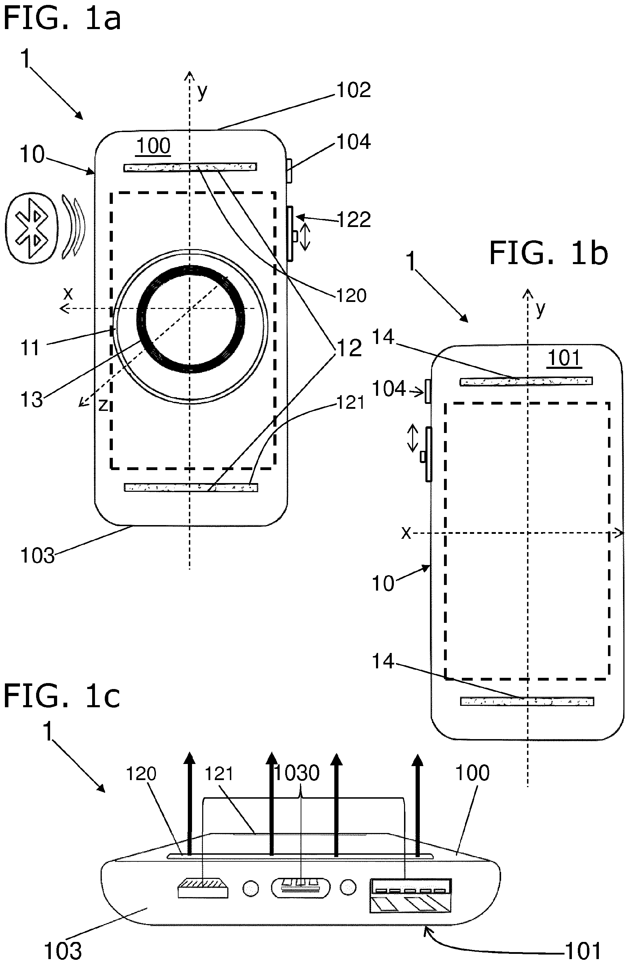

Um eine mögliche Verschwenkung der Mehrzweck-Powerbank 1 bzw. eines angekoppelten Mobiltelefons relativ zu einander zu erläutern, sind die drei Raumrichtungen x, y, z in Figur 1a angedeutet. Eine spätere relative Verschwenkung findet um die aus der x-y-Ebene der Mehrzweck-Powerbank 1 herausragende z-Achse statt.

Die Mehrzweck-Powerbank 1 bzw. das Gehäuse 10, weisen eine Powerbankfrontseite 100, eine Powerbankrückseite 101, sowie eine Stirnseite 102 und eine Fussseite 103 auf. Die Mehrzweck-Powerbank 1 weist am Gehäuse 10, hier an einer Seitenfläche, einen An-/Ausschalter 104 und einen Intensitätsregler 122 auf. Innerhalb des Gehäuses 10 ist eine wiederaufladbare Batterie bzw. eine Akku möglichst hoher Kapazität verbaut, welcher hier gestrichelt angedeutet ist. Eine Ladeelektronik und eine Elektronik für die Steuerung des im Folgenden beschriebenen Zusatznutzens sind zwar im Gehäuse 10 vorhanden, werden aber hier nicht dargestellt. Durch das "bluetooth"-Symbol ist angedeutet, dass die Mehrzweck-Powerbank 1 auch drahtlos durch ein Mobiltelefon steuerbar ist, wobei die Elektronik entsprechend ausgerüstet ist.

An die Powerbankfrontseite 100 soll ein Mobiltelefon ankoppelbar sein. Dazu sind am oder im Gehäuse 10 Befestigungsmittel 11 vorgesehen. Die Befestigungsmittel 11 können wahlweise verschiedene mechanische Ausführungen umfassen oder permanentmagnetisch sein. Hier wird ein permanentmagnetischer Ring 11 innerhalb des Gehäuses 10 und damit während des Betriebs im Gehäuse 10 unsichtbar verstaut, eingesetzt. Neben einem durchgängigen Ring, können auch Ringsegmente oder scheibenartige Permanentmagnete mit unterschiedlichen Querschnittsflächen verwendet werden. Um eine Rotation eine Mobiltelefons bzw. der Mehrzweck-Powerbank 1 nach der Ankopplung zu erleichtern, ist eine kreisförmige Ausführung vorteilhaft.

Eine Aufladung eines Mobiltelefons oder Smartphones, die Kernaufgabe der Mehrzweck-Powerbank 1, wird über Auflademittel 13 gelöst, welche an der internen wiederaufladbaren Batterie bzw. der zugehörigen Ladeelektronik angeschlossen sind. Hier wird die Aufladung bevorzugt induktiv über mindestens eine Induktionsspule 13 erreicht, welche ebenfalls im Gehäuse 10 verdeckt gelagert ist. Es ist aber auch eine kabelbasierte Aufladung des Mobiltelefonakkus möglich, mit den in Figur 1c beschriebenen Mitteln.

Die hier interessierende, die Leistungsfähigkeit eines Mobiltelefons erweiternde Funktion, wird durch Frontseitenbeleuchtungsmittel 12 und/oder durch auf der Powerbankrückseite 101 angeordnete Rückseitenbeleuchtungsmittel 14 erreicht.

Als Frontseitenbeleuchtungsmittel 12 sind hier zwei LED-Balken 12, ein erster LED-Balken 120 und ein zweiter LED-Balken 121 angeordnet. Die Frontseitenbeleuchtungsmittel 12 strahlen im ausgelösten Zustand vom Gehäuse 10 und der Powerbankfrontseite 100 weg.

Als Rückseitenbeleuchtungsmittel 14 können ähnliche LED-Balken eingesetzt werden, welche von der Powerbankrückseite 101 kontrollierbar wegstrahlen, wobei ebenfalls eine manuell oder via angekoppeltem Mobiltelefon bedienbar Elektronik für die Rückseitenbeleuchtungsmittel 14 vorhanden sein muss.

Die Mehrzweck-Powerbank 1 bzw. die Frontseitenbeleuchtungsmittel 12 und/oder Rückseitenbeleuchtungsmittel 14 sind durch Einstellmittel 104, 122 manuell bedienbar und durch eine elektronische Ankopplung eines Mobiltelefons an die Mehrzweck-Powerbank 1, durch ein Kabel oder kabellos, vom Mobiltelefon gesteuert bedienbar.

Dabei kann entweder eine einstellbare dauerhafte Beleuchtung oder eine blitzartige Beleuchtung durch die Frontseitenbeleuchtungsmittel 12 und/oder die Rückseitenbeleuchtungsmittel 14 manuell oder via Mobiltelefon eingestellt werden. Diese Zusatzfunktion ist einsetzbar, sobald ein Mobiltelefon mindestens elektronisch, via Kabel oder kabellos an die Mehrzweck-Powerbank 1 angekoppelt wurde.

Mögliche Ladeanschlüsse 1030 zur Aufladung eines Mobiltelefons durch die Mehrzweck-Powerbank 1, sind in Figur 1c dargestellt, wobei gängige Buchsentypen für sämtliche Arten von Mobiltelefonen einsetzbar sind. Die Ladeanschlüsse 1030 sind hier an der Fussseite 103 angeordnet und als verschiedene Micro-USB-Buchsen (A, B, C) ausgeführt. Mit den durchgehenden Pfeilen ist die Lichtabstrahlung des ersten LED-Balkens 120 von der Powerbankfrontseite 100 angedeutet. Die Buchsen sind auf gängige Mobilgeräte abgestimmt und durch die Anordnung ist zu jeder Zeit eine störungsfreie Lichtabstrahlung von der Powerbankfrontseite 100 gewährleistet.

Um den Transport der Mehrzweck-Powerbank 1, mit oder ohne angekoppeltem Mobiltelefon zu erleichtern, ist ein Gürtelclip 15 vorgesehen, welcher am Gehäuse 10, bevorzugt im Bereich der Stirnseite 102 angeordnet ist. Dieser Gürtelclip 15 wird, wie mit dem Pfeil in der Detailansicht angedeutet, in Richtung Gehäuse 10 bewegt, befestigt. Damit kann die Mehrzweck-Powerbank 1 bequem an einem Gürtel getragen werden.

Ausserdem kann ein Tischständer 16 am Gehäuse 10 unlösbar oder lösbar befestigt werden. Durch ein Aufklappen des Tischständers 16 kann die Mehrzweck-Powerbank 1 mit oder ohne angekoppeltem Mobiltelefon einfach auf einem Tisch gelagert werden, wobei ein Bildschirm eines Mobiltelefons problemlos einsehbar bleibt.

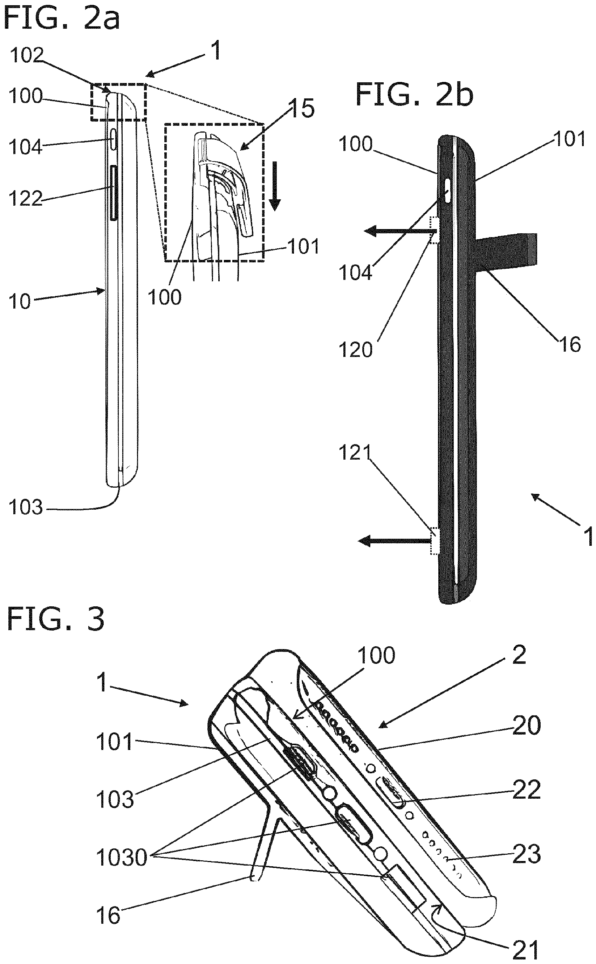

Die physische Ankopplung eines Mobiltelefons 2, welches auch ein Smartphone oder Tablett sein könnte, ist in Figur 3 gezeigt. Durch den aufgeklappten Tischständer 16, ist die Kombination aus Mehrzweck-Powerbank 1 und Mobiltelefon 2 schräg stehend auf einer Oberfläche platziert. Während eine Bildschirmseite 20 des Mobiltelefons 2 auf der der Mehrzweck-Powerbank 1 abgewandten Seite angeordnet ist, weist eine Mobiltelefonrückseite 21 direkt zur Powerbankfrontseite 100. Hier ist an einer Fussseite des Mobiltelefons 2 eine Buchse 22 zur Aufladung oder Datenaustausch, sowie Lautsprecher 23 dargestellt, welche nach Ankupplung weiterhin zugänglich sind.

Durch die permanentmagnetischen Befestigungsmittel 11, wird das Mobiltelefon 2 magnetisch rotierbar und lösbar gehalten. Viele heute erhältlichen Mobiltelefone 2 haben einen wirkverbindbaren ferromagnetischen oder permanentmagnetischen Einsatz in ihrem Gehäuse, sodass die permanentmagnetische Befestigung ohne weitere Massnahmen am Mobiltelefon 2 stattfinden kann. Andernfalls, kann ein ferromagnetischer oder permanentmagnetischer Einsatz in das Gehäuses des Mobiltelefons 2 eingelegt werden. Da auch heute verbreitet Mobiltelefone 2 Vorkehrungen zur kabellosen Aufladung getroffen haben und den Qi-Standard zur induktiven Energieübertragung erfüllen, sind auch hier keine Massnahmen für die kabellose Aufladung zu ergreifen. Es sind aber auch Nachrüstmittel vorhanden, um ältere Mobiltelefone für die kabellose Aufladung zu präparieren.

Mit der Zusatzfunktion der Mehrzweck-Powerbank 1 wird vor allem das Fotografieren mit dem angekoppelten Mobiltelefon 2 unterstützt, was zu besseren Ergebnissen führt.

Vor allem bei der Anfertigung von Selbstporträts oder Selbstbildern, den sogenannten Selfies, bietet die Mehrzweck-Powerbank 1 einen grossen Zusatznutzen.

Wenn das Mobiltelefon 2 an der Mehrzweck-Powerbank 1 mechanisch oder magnetisch angekoppelt ist, kann die Mehrzweck-Powerbank 1 in eine neutrale Ankuppelstellung I gebracht werden. In dieser neutrale Ankupplungsstellung I sind Mehrzweck-Powerbank 1 und Mobiltelefon 2 mit ihren Längsachsen y parallel zueinander ausgerichtet, sodass eine kompakte Kombination beider Geräte erreicht wird, welche nur eine grössere Dicke aufweist.

Durch die rotierbare Ausführung der Befestigungsmittel 11, kann die Mehrzweck-Powerbank 1 um eine Querachse z relativ zum Mobiltelefon 2 rotiert werden und so in eine verschwenkte Selbstbildstellung II gebracht werden. In der Selbstbildstellung II ist die Mehrzweck-Powerbank 1 um einen Schwenkwinkel von etwa 90° relativ zum Mobiltelefon 2 rotiert. Bevorzugt ist der Schwenkwinkel um die Querachse z zwischen ±80° und ±100° einstellbar, sodass der Benutzer ausreichend beleuchtet werden kann.

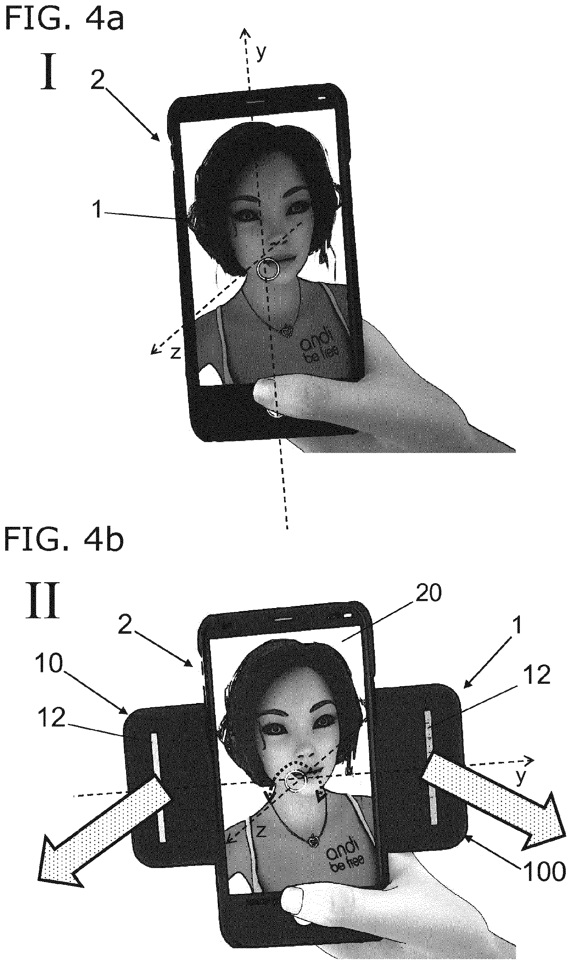

Wie in Figur 4b deutlich erkennbar, liegen die, auf der Powerbankfrontseite 100 angeordneten Frontseitenbeleuchtungsmittel 12 in der Selbstbildstellung II direkt dem Nutzer des Mobiltelefons 2 direkt zugewandt. Die freigeschwenkten Frontseitenbeleuchtungsmittel 12 können ungehindert Licht in Richtung des Nutzers des Mobiltelefons 2 in z-Richtung der Mehrzweck-Powerbank 1 und des Mobiltelefons 2 abstrahlen, wodurch das Selbstbild des Nutzers beleuchtet wird. Die Art der Beleuchtung durch die Frontseitenbeleuchtungsmittel 12 kann wahlweise manuell oder per Funk mittels des Mobiltelefons 2 eingestellt werden. Dabei kann entweder eine dauerhafte Ausleuchtung oder eine blitzartige Beleuchtung gewählt und durchgeführt werden. Die Aussendung des Lichts in Richtung Nutzer bzw. an der Bildschirmseite 20 des Mobiltelefons 2 vorbei ist mit Pfeilen symbolisiert. Das resultierende Selbstbild ist entsprechend deutlich besser belichtet.

Die Befestigung der Mehrzweck-Powerbank 1 am Mobiltelefon 2 muss lösbar und rotierbar ausgeführt sein, damit ein funktionaler Einsatz bei Aufnahme von Selbstbildern möglich ist. Dies ist durch Befestigungsmittel 11 mit Permanentmagneten an der Mehrzweck-Powerbank 1 und entsprechenden Mitteln am Mobiltelefon 2 erreicht. Weitere Befestigungsmittel 11 könnten ein oder mehr Saugnäpfe oder mechanisch ausgeführte drehbare Befestigungsmittel sein.

Da die Mehrzweck-Powerbank 1 lösbar mit dem Mobiltelefon 2 verbindbar ist, kann die Mehrzweck-Powerbank 1 für Beleuchtungszwecke auch vor der Aufnahme vom Mobiltelefon 2 physisch getrennt werden und zur Ausleuchtung eines zu fotografierenden Gegenstandes eingesetzt werden. Dies kann dann auch wahlweise mit den Frontseitenbeleuchtungsmitteln 12 oder mit Rückseitenbeleuchtungsmitteln 14 erfolgen, wobei die Mehrzweck-Powerbank 1 dazu in der Hand gehalten oder zur Beleuchtung abgestellt wird. Da die elektronische Ankupplung zwischen Mehrzweck-Powerbank 1 und Mobiltelefon 2 verbleibt, kann die elektronische Steuerung weiterhin erfolgen. Die elektronische Steuerung der Lichtauslösung ist für beide Beleuchtungsmittel 12, 14 kabellos über das Mobiltelefon oder manuell durch den Benutzer mittels An-/Ausschalter 104 und/oder Intensitätsregler 122 erfolgen.

Die Frontseitenbeleuchtungsmittel 12 und optionalen Rückseitenbeleuchtungsmittel 14 sind hier aus mehrere LEDs umfassenden LED-Balken gebildet. Die einzelnen LEDs sind manuell und/oder kabellos durch das Mobiltelefon aktivierbar und deaktivierbar. Anstelle der gradlinigen balkenartigen Form, können die LEDs auch in Wellenlinien, Halbkreisen oder Teilellipsen angeordnet werden.

Die Mehrzweck-Powerbank 1 ist hier im Wesentlichen rechteckig ausgestaltet und weist eine Länge auf, welche grösser als die Breite des Smartphones 2 ist. Damit wird die Mehrzweck-Powerbank 1 in der neutralen Ankuppelstellung I vom Smartphone 2 verdeckt und ragt in der verschwenkten Selbstbildstellung II über die Breite des Smartphones hinaus, sodass die Frontseitenbeleuchtungsmittel 12 in Richtung des Smartphonenutzers abstrahlen können. Wenn das Smartphone 2 wie üblich im Wesentlichen rechteckig ausgestaltet ist, könnte die Mehrzweck-Powerbank 1 auch einen elliptischen Querschnitt aufweisen.

Die Mehrzweck-Powerbank 1 kann mechanisch derart an einem Smartphone gehalten sein, beispielsweise durch bekannte Saugnäpfe , dass die Mehrzweck-Powerbank 1 von der Rückseite des Smartphones gelöst wird, dann relativ zum Smartphone rotiert wird und anschliessend wieder mechanisch gekoppelt wird. Dadurch werden die unterschiedlichen Schwenkeinstellungen erreicht.

### Bezugszeichenliste

- 1: Mehrzweck-Powerbank
- 10: Gehäuse

- 100: Powerbankfrontseite
- 101: Powerbankrückseite
- 102: Stirnseite
- 103: Fussseite

- 1030: Ladeanschluss

- 104: An-/Ausschalter

- 11: Befestigungsmittel (Permanentmagnet, Ring im Inneren, verdeckt)
- 12: Frontseitenbeleuchtungsmittel (z.B. Stereoblitz)

- 120: erster LED-Balken
- 121: zweiter LED-Balken
- 122: Intensitätsregler (für Blitz/Lampe, manuell)

- 13: Auflademittel (Spule im Inneren, verdeckt)
- 14: Rückseitenbeleuchtungsmittel (optional)
- 15: Gürtelclip (einrastbar)
- 16: Tischständer (ausklappbar)

- 2: Smartphone
- 20: Bildschirmseite
- 21: Mobiltelefonrückseite
- 22: Buchse
- 23: Lautsprecher
- I: neutrale Ankuppelstellung
- II: verschwenkte Selbstbildstellung

## Patentansprüche

1. Mehrzweck-Powerbank (1), umfassend ein Gehäuse (10) mit einer Powerbankfrontseite (100) und einer der Powerbankfrontseite (100) gegenüberliegenden Powerbankrückseite (101), wobei das Gehäuse (10) Befestigungsmittel (11) zur Ankopplung der Powerbankfrontseite (100) an eine Mobiltelefonrückseite (21) eines Mobiltelefons (2) aufweist und das Gehäuse (10) Auflademittel (13) zur kabellosen Aufladung des Mobiltelefons (2) und mindestens ein Beleuchtungsmittel umfasst,
wobei die Befestigungsmittel (11) derart permanentmagnetisch und/oder mechanisch ausgestaltet sind, dass eine lösbare um eine Querachse (z) verschwenkbare Befestigung der Mehrzweck-Powerbank (1) relativ zum Mobiltelefon (2) erreichbar ist, **dadurch gekennzeichnet, dass**
das mindestens eine Beleuchtungsmittel ein auf der Powerbankfrontseite (100) angeordnetes Frontseitenbeleuchtungsmittel (12) ist, welches manuell durch einen An-/Ausschalter (104) bzw. einen Intensitätsregler (122) und/oder kabellos mittels einer Funkverbindung durch das Mobiltelefon (2) steuerbar ist, sodass Licht von der Powerbankfrontseite (100) in Richtung einer Querachse (z) abstrahlbar ist und das Gehäuse (10) bei physischer Ankopplung an ein Mobiltelefon (2) zwischen einer neutralen Ankuppelstellung (I) und einer verschwenkten Selbstbildstellung (II) relativ zum Mobiltelefon (2) hin und her verschwenkbar gelagert ist.

2. Mehrzweck-Powerbank (1) nach Anspruch 1, wobei ein Schwenkwinkel von der Ankuppelstellung (I) bis zur verschwenkten Selbstbildstellung (II) um die Querachse (z) zwischen ±80° und ±100° einstellbar ist.

3. Mehrzweck-Powerbank (1) nach Anspruch 1, wobei das mindestens eine Beleuchtungsmittel ein auf der Powerbankrückseite (101) angeordnetes und von dort abstrahlendes Rückseitenbeleuchtungsmittel (14) umfasst.

4. Mehrzweck-Powerbank (1) nach einem der vorhergehenden Ansprüche, wobei die Frontseitenbeleuchtungsmittel (12) und/oder die Rückseitenbeleuchtungsmittel (14) aus mehrere LEDs umfassenden gradlinigen LED-Balken gebildet sind.

5. Mehrzweck-Powerbank (1) nach Anspruch 4, wobei voneinander in z-Richtung auf der Powerbankfrontseite (100) voneinander beabstandet ein erster LED-Balken (120) und ein zweiter LED-Balken (121) angeordnet ist.

6. Mehrzweck-Powerbank (1) nach einem der Ansprüche 4 oder 5, wobei die LED-Balken in Wellenlinien, Halbkreisen oder Teilellipsen angeordnet sind.

7. Mehrzweck-Powerbank (1) nach einem der vorhergehenden Ansprüche, wobei die Befestigungsmittel (11) im Inneren des Gehäuses (10) angeordnet sind und von mindestens einem permanentmagnetischen Ring (11) gebildet sind.

8. Mehrzweck-Powerbank (1) nach einem der vorhergehenden Ansprüche, wobei das Auflademittel (13) als mindestens eine Induktionsspule (13) ausgestaltet ist, welche an einer wiederaufladbaren Batterie bzw. einer zugehörigen Ladeelektronik im Inneren des Gehäuses (10) angeschlossen ist.

9. Mehrzweck-Powerbank (1) nach einem der vorhergehenden Ansprüche, wobei ein Gürtelclip (15) am Gehäuse (10) angeordnet ist.

10. Mehrzweck-Powerbank (1) nach einem der vorhergehenden Ansprüche, wobei ein Tischständer (16) am Gehäuse (10) ausklappbar angeordnet ist.

11. Mehrzweck-Powerbank (1) nach einem der vorhergehenden Ansprüche, wobei eine kabelgebundene Aufladung durch Anordnung von Ladeanschlüsse (1030) an einer Fusseite (103) des Gehäuses (10) mit geeigneten Buchsen, eine störungsfreie Lichtabstrahlung von der Powerbankfrontseite (100) gewährleistend, vorgesehen ist.

## Claims

1. A multi-purpose power bank (1) comprising a housing (10) with a power bank front side (100) and a power bank rear side (101) opposite the power bank front side (100), wherein the housing (10) has fastening means (11) for coupling the power bank front side (100) to a mobile telephone rear side (21) of a mobile telephone (2) and the housing (10) comprises charging means (13) for wireless charging of the mobile telephone (2) and at least one illumination means,
wherein the fastening means (11) are permanently magnetic and/or mechanically designed in such a way that a detachable fastening of the multi-purpose power bank (1) relative to the mobile telephone (2), which can be pivoted about a transverse axis (z), can be achieved,
**characterised in that**
the at least one illumination means is a front side illumination means (12) arranged on the powerbank front side (100), which is manually controlled by an on/off switch (104) and/or an intensity regulator (122) and/or wirelessly by means of a radio link by the mobile telephone (2), so that light can be emitted from the powerbank front side (100) in the direction of a transverse axis (z) and the housing (10), when physically coupled to a mobile telephone (2), is mounted such that it can be pivoted back and forth between a neutral coupling position (I) and a pivoted self-image position (II) relative to the mobile telephone (2).

2. A multi-purpose power bank (1) according to claim 1, wherein a pivot angle from the coupling position (I) to the pivoted self-image position (II) about the transverse axis (z) is adjustable between ±80° and ±100°.

3. A multi-purpose powerbank (1) according to claim 1, wherein said at least one illumination means comprises a rear illumination means (14) arranged on and radiating from the powerbank rear side (101).

4. A multi-purpose power bank (1) according to any one of the preceding claims, wherein said front side lighting means (12) and/or said rear side lighting means (14) are formed of rectilinear LED bars comprising a plurality of LEDs.

5. A multi-purpose power bank (1) according to claim 4, wherein a first LED bar (120) and a second LED bar (121) are arranged spaced apart from each other in the z-direction on the power bank front side (100).

6. A multi-purpose power bank (1) according to any one of claims 4 or 5, wherein the LED bars are arranged in wavy lines, semicircles or partial ellipses.

7. A multi-purpose power bank (1) according to any one of the preceding claims, wherein the fixing means (11) are arranged inside the housing (10) and are formed by at least one permanent magnetic ring (11).

8. A multi-purpose power bank (1) according to any one of the preceding claims, wherein the charging means (13) is configured as at least one induction coil (13) which is connected to a rechargeable battery or associated charging electronics inside the housing (10).

9. A multi-purpose power bank (1) according to any one of the preceding claims, wherein a belt clip (15) is arranged on the housing (10).

10. A multi-purpose power bank (1) according to any one of the preceding claims, wherein a table stand (16) is foldably arranged on the housing (10).

11. A multi-purpose power bank (1) according to any one of the preceding claims, wherein wired charging is provided by arranging charging terminals (1030) on a foot side (103) of the housing (10) with suitable sockets, ensuring interference-free light emission from the power bank front side (100).

## Revendications

1. Banque d'énergie multi-usages (1) comprenant un boîtier (10) avec un côté avant de bloc d'alimentation (100) et un côté arrière de bloc d'alimentation (101) opposé au côté avant de bloc d'alimentation (100), dans lequel le boîtier (10) a des moyens de fixation (11) pour coupler le côté avant de bloc d'alimentation (100) à un côté arrière de téléphone mobile (21) d'un téléphone mobile (2) et le boîtier (10) comprend des moyens de charge (13) pour la charge sans fil du téléphone mobile (2) et au moins un moyen d'éclairage,
dans lequel les moyens de fixation (11) sont conçus de manière magnétique et/ou mécanique permanente de telle sorte qu'une fixation détachable de la banque d'énergie multi-usages (1) par rapport au téléphone mobile (2), qui peut pivoter autour d'un axe transversal (z), peut être réalisée,
**caractérisé en ce que**
le au moins un moyen d'éclairage est un moyen d'éclairage frontal (12) disposé sur la face avant (100) du powerbank, qui est commandé manuellement par un interrupteur marche/arrêt (104) et/ou un régulateur d'intensité (122) et/ou sans fil au moyen d'une liaison radio par le téléphone mobile (2), de sorte que la lumière peut être émise par la face avant (100) de la powerbank dans la direction d'un axe transversal (z) et le boîtier (10), lorsqu'il est couplé physiquement à un téléphone mobile (2), est monté de manière à pouvoir pivoter en avant et en arrière entre une position de couplage neutre (I) et une position d'auto-image pivotée (II) par rapport au téléphone mobile (2).

2. Banque d'énergie multi-usages (1) selon la revendication 1, dans lequel un angle de pivotement de la position de couplage (I) à la position d'auto-image pivotée (II) autour de l'axe transversal (z) est réglable entre ±80° et ±100°.

3. Banque d'énergie multi-usages (1) selon la revendication 1, dans lequel ledit au moins un moyen d'éclairage comprend un moyen d'éclairage arrière (14) disposé sur et rayonnant depuis le côté arrière (101) du banc d'alimentation.

4. Banque d'énergie multi-usages (1) selon l'une quelconque des revendications précédentes, dans lequel lesdits moyens d'éclairage avant (12) et/ou lesdits moyens d'éclairage arrière (14) sont formés de barres de LED rectilignes comprenant une pluralité de LED.

5. Banque d'énergie multi-usages (1) selon la revendication 4, dans lequel une première barre de LED (120) et une deuxième barre de LED (121) sont disposées à distance l'une de l'autre dans la direction z sur la face avant (100) du bloc d'alimentation.

6. Banque d'énergie multi-usages (1) selon l'une quelconque des revendications 4 ou 5, dans lequel les barres de LED sont disposées en lignes ondulées, en demi-cercles ou en ellipses partielles.

7. Banque d'énergie multi-usages (1) selon l'une quelconque des revendications précédentes, dans laquelle les moyens de fixation (11) sont disposés à l'intérieur du boîtier (10) et sont formés par au moins un anneau magnétique permanent (11).

8. Banque d'énergie multi-usages (1) selon l'une quelconque des revendications précédentes, dans laquelle le moyen de charge (13) est configuré comme au moins une bobine d'induction (13) qui est reliée à une batterie rechargeable ou à une électronique de charge associée à l'intérieur du boîtier (10).

9. Banque d'énergie multi-usages (1) selon l'une quelconque des revendications précédentes, dans laquelle un clip de ceinture (15) est disposé sur le boîtier (10).

10. Banque d'énergie multi-usages (1) selon l'une quelconque des revendications précédentes, dans laquelle un support de table (16) est disposé de manière pliable sur le boîtier (10).

11. Banque d'énergie multi-usages (1) selon l'une quelconque des revendications précédentes, dans lequel la charge filaire est assurée par la disposition de bornes de charge (1030) sur un côté pied (103) du boîtier (10) avec des prises adaptées, assurant une émission de lumière sans interférence depuis la face avant (100) du banc d'alimentation.
